# EUROPEAN PATENT APPLICATION

(11) **EP 4 838 727 A1**
(43) Date of publication of application: **11.11.2026**
(21) Application number: 26166004.7
(22) Date of filing: 19.03.2026
(51) Int. Cl.: H02G 3/08

(54) **MODULAR JUNCTION BOX**

(30) Priority: 06.05.2025 IT 202500010080
(71) Applicant: Detas S.p.A., 25086 Rezzato, (BS) (IT)
(72) Inventor: DURIN, Giorgio, I-25086 Rezzato, Brescia (IT); BROGNOLI, Mattia, I-25086 Rezzato, Brescia (IT)
(74) Representative: Gualeni, Nadia

(57) **Abstract**

The object of the present invention is a junction box (1) for running and guiding at least one cable. The box (1) comprises a body (2) formed by a bottom (21) from which walls (22, 24) protrude, connected to each other by side members (23), in which a box compartment (25) is defined between the bottom (21) and the walls (22, 24); the box (1) is provided with a cover (3), engageable with the body (2) to close the box compartment (25). The box (1) is characterized in that at least one wall (22, 24) of the body (2) is provided with at least one removable portion (270) adapted to be removed to form a window (271) intended to be closed by a panel for running a cable. Advantageously, the removable portion (270) is delimited at least partially by a weakened portion (272) of the wall (22, 24), to facilitate the removal thereof. Advantageously, further, the body (2) comprises at least one panel seat (29) arranged behind at least one removable portion (270) so as to house a panel for closing the window (271) obtained by removing the removable portion (270). Advantageously, a junction box according to the present invention provides an optimized solution for all users requiring a safe, fast, and customizable cable lead, while at the same time meeting the safety requirements required in the industrial and automation field or in the domestic field.

## Description

### Field of the invention

The object of the present invention is a modular junction box provided with knockout walls and cable lead tracks for running cables, connectorized cables, conduits and sheaths, in the industrial and/or domestic field.

Therefore, the object of the present invention is a junction box for running and guiding a cable, also with connectors, through an opening, for example of a container, such as an electric cabinet, so that the cable is retained and sealed, preventing fluids and/or gases and/or dust from entering or leaving said container and at the same time preventing the cable from being torn or erroneously moved from its predefined installation position.

In particular, the present invention relates to a junction box used, among other things, to achieve a secure connection between machinery and equipment, and which is robust and reliable, even in applications where there is an abundant presence of water, dust, vibrations or extreme temperatures.

Even more particularly, the present invention relates to a junction box assembly that permits cables with connectors to be run rapidly and securely, which is particularly useful also in maintenance and overhauls of installations and machinery.

### Background art

An example of a junction box of the prior art is described in document CN2615934Y. This type of box requires drilling at the side walls so as to form a through hole for a cable. In the conventional method of installation of this type of box, it is therefore necessary to make a hole in the box, generally with a drill or a milling cutter, with the risk of creating burrs or off-axis holes. Further examples of prior art junction boxes are described in documents US 5 770 817 A, WO 2020/010371 A1 and EP 4 060 839 A1.

To overcome this drawback, junction boxes have been devised whose body is provided with removable portions to create a through hole for the cable. An example of such junction boxes of the prior art is described in document CN222127586U. Further examples of junction boxes with removable portions are described in documents DE 40 04 340 A1 and US 3 902 002 A.

Both known types of junction box have some drawbacks. First of all, once a hole has been created in the wall of the box, it is necessary to mount a cable gland for each cable, which proves difficult and complex due to the high number of components to be managed: cable gland, seal, locknut. Further, the cable gland does not allow running connectorized cables, thus limiting the possible usage scenarios. And furthermore, given the limited space available on the wall of the junction box and the minimum distance to be maintained between the cable glands, in the event of a large number of cables to be managed it is necessary to use large junction boxes. Finally, the increased time and cost expenditure of conventional systems, which require purchasing, storing, and mounting a large number of cable glands, is apparent.

None of these known solutions make it possible to meet the felt need to provide a junction box optimized for different usage requirements, capable of providing safe, fast, and customizable cable running, and that, at the same time, complies with the safety requirements in the industrial and automation sectors, as well as in the domestic sector.

### Solution

These and other objects are achieved by means of a junction box according to claim 1, as well as by a junction kit according to claim 10.

Some advantageous embodiments are the object of the dependent claims.

By virtue of the present invention, it is possible to provide a junction box allowing the customized management of running and guiding cables, connectorized cables (that is, cables provided with a connector), conduits and sheaths in the industrial field or the domestic field, also as a function of the number and size of the cables to be managed.

By virtue of the present invention, cables, for example electric cables with connectors, as well as cables without connectors, may be quickly inserted into the junction box so as to be always sealed with a high degree of clamping.

By virtue of the present invention, it is possible, during the mounting step or at the maintenance step, to quickly and safely change, or reorganize, the arrangement of cables and even remove and/or insert new cables from/into the same junction box, also of a different size from those initially inserted, without having to use a new box.

### Figures

Further features and advantages of the invention will become apparent from the description below of preferred embodiments thereof, given by way of non-limiting example, with reference to the accompanying drawings, in which:

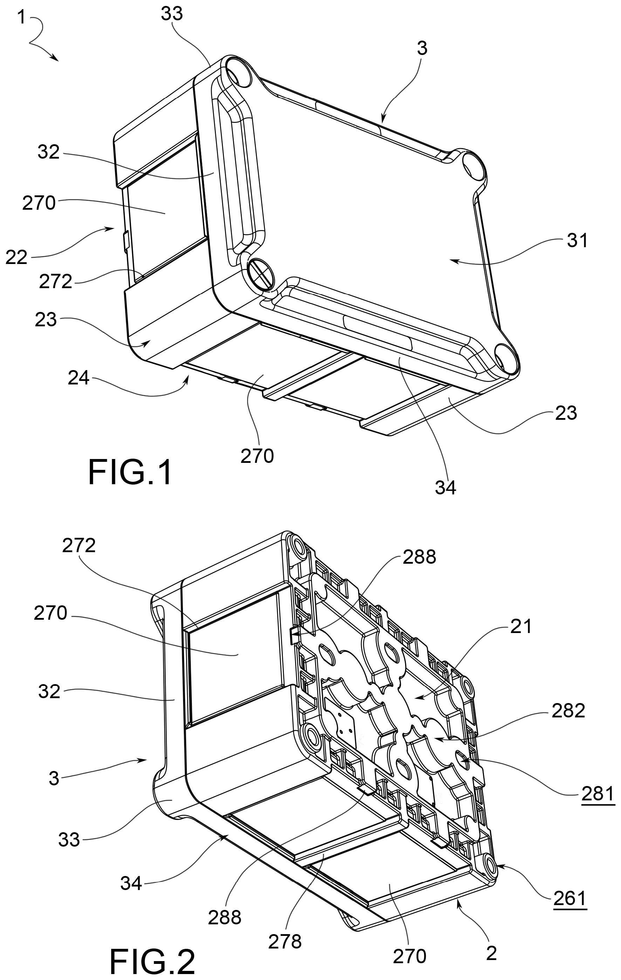

- Figure 1 shows an axonometric view of the front part of a junction box according to the present invention;
- Figure 2 shows an axonometric view of the rear part of a junction box according to the present invention;

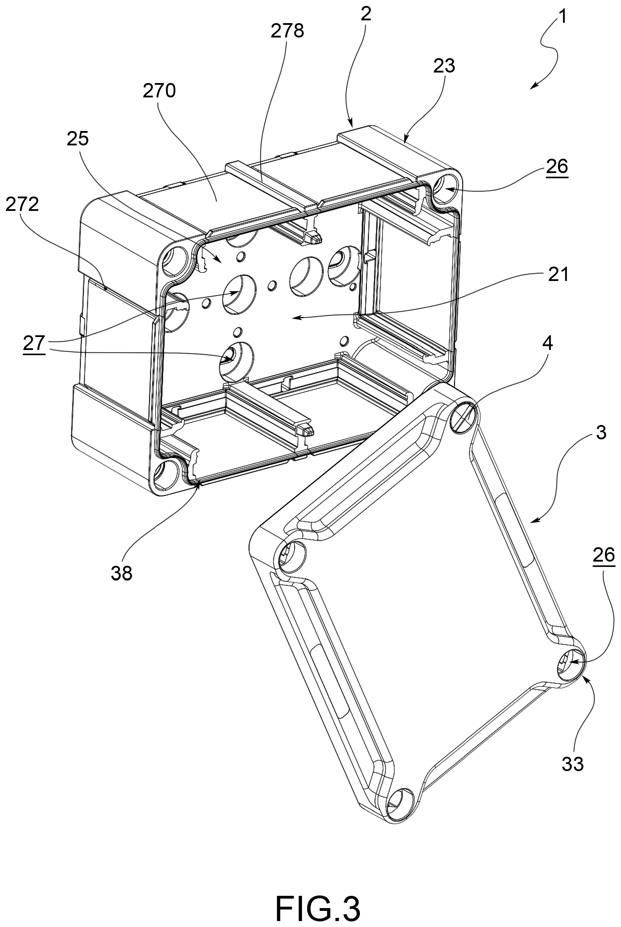

- Figure 3 shows an axonometric view of the junction box of Figure 1, partially open;

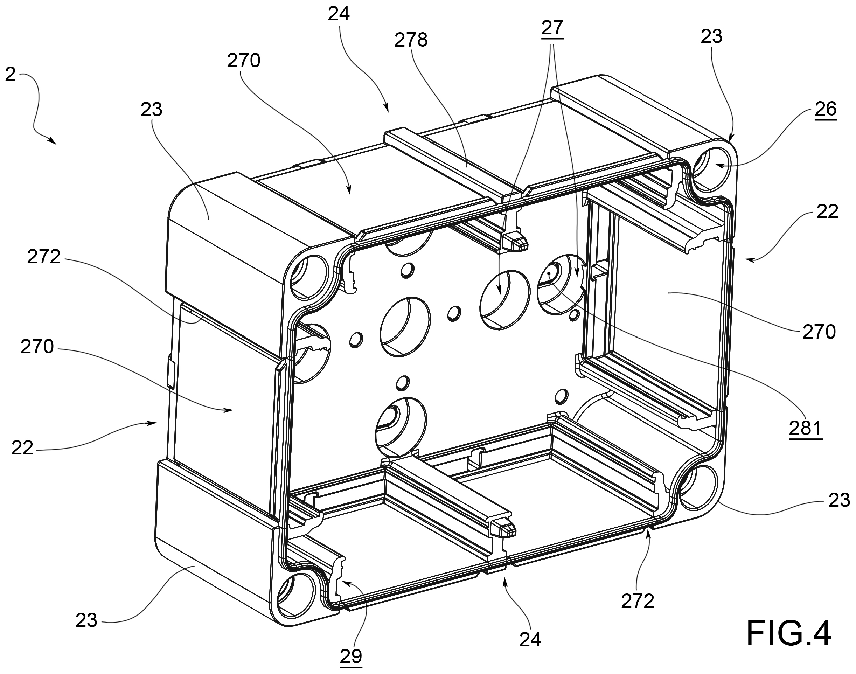

- Figure 4 shows an axonometric view of the front part of the body of the junction box of Figure 1;

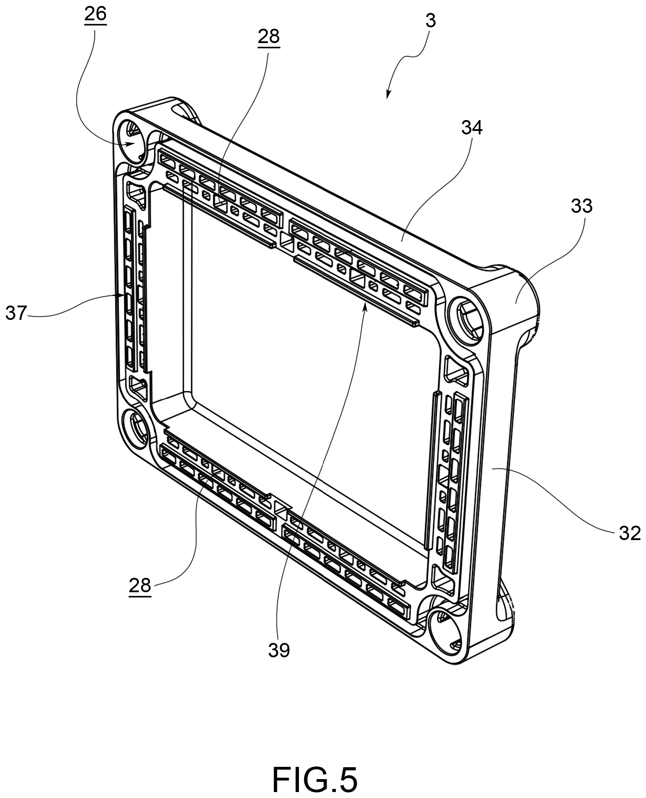

- Figure 5 shows an axonometric view of the rear part of the cover of the junction box of Figure 1;
- Figure 6 shows the body of the junction box of Figure 4, in which all the removable portions of the walls of the body of the box have been removed to create a plurality of windows intended to be closed by suitable panels (also referred to as wall pass-through supports);
- Figure 7 shows the body of the junction box of Figure 6 in which two partitions are engaged with the long sides and one partition is engaged with the short side of the junction box body to divide two of the available windows;
- Figure 8 shows the body of the junction box of Figure 7 in which four panels are engaged with the body of the junction box to close some of the available windows;
- Figures 9A and 9B show a detailed axonometric view and side view of a component of the junction box of Figure 1, i.e., a cover screw adapted to connect the body of the box with the relative cover;
- Figure 10 shows an axonometric view of the front part of a junction kit according to the present invention, comprising the box of Figure 1 to which a partition for dividing a window obtained by removing a removable portion of the body of the box, and five panels for closing the windows obtained by removing some removable portions of the body of the box, have been applied;

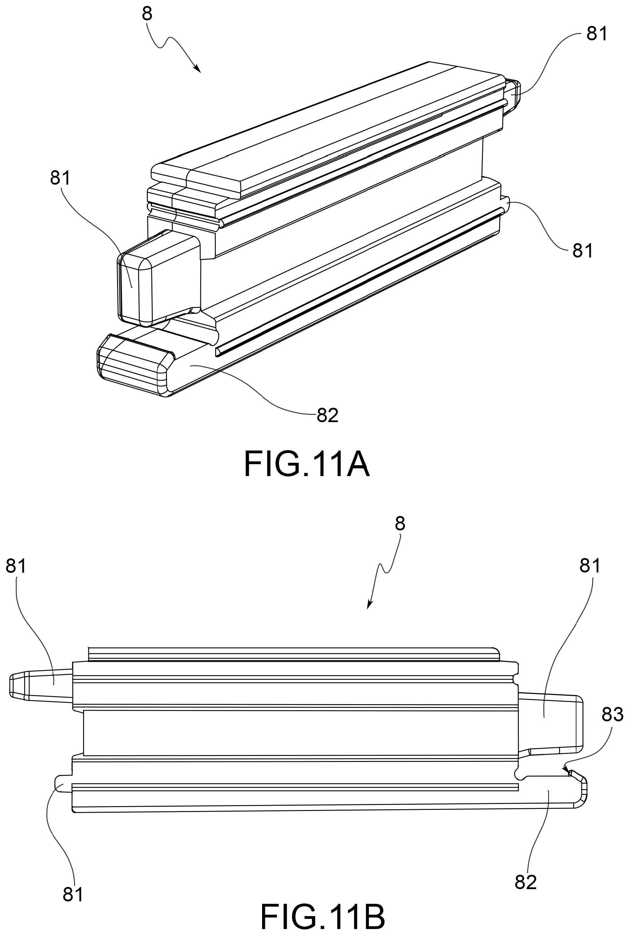

- Figures 11A and 11B show a detailed axonometric view and side view of a component of the junction kit of Figure 10, i.e., a partition engageable with the body of the junction box to divide a window obtained by removing a removable portion of the body of the box;

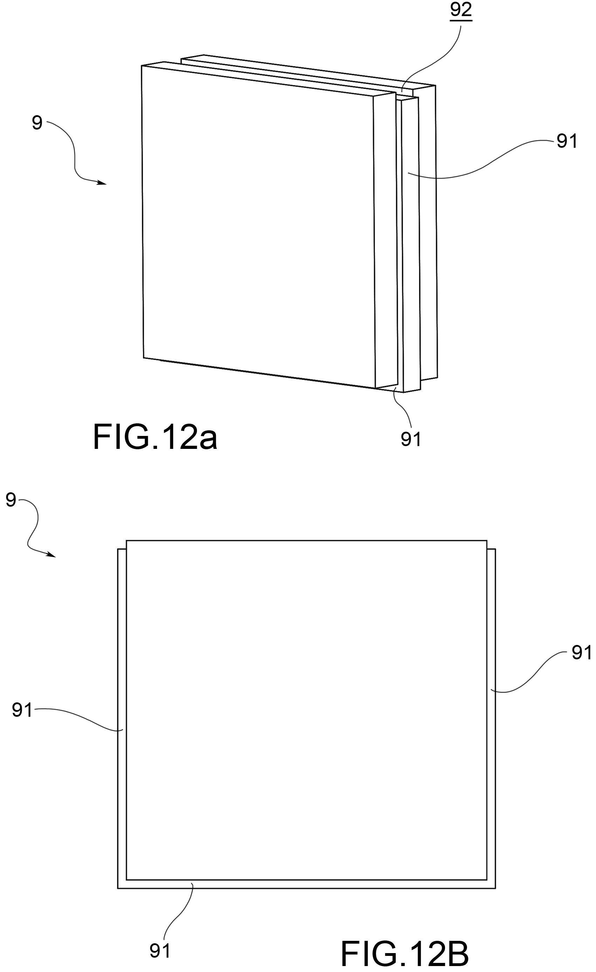

- Figures 12A and 12B show a detailed axonometric view and side view of a component of the junction kit of Figure 10, i.e., a panel, in an embodiment, engageable with the body of the junction box to at least partially close a window obtained by removing a removable portion of the body of the box;

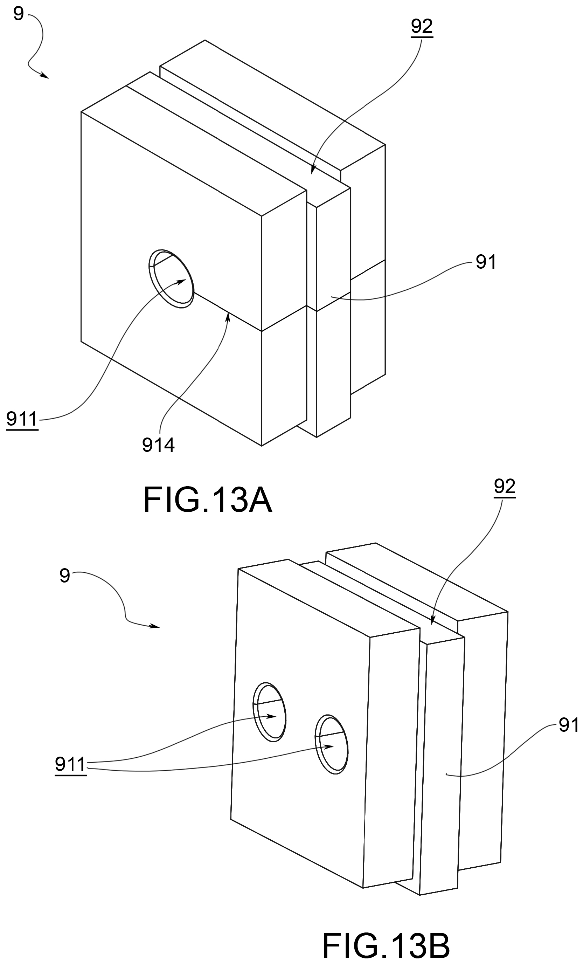

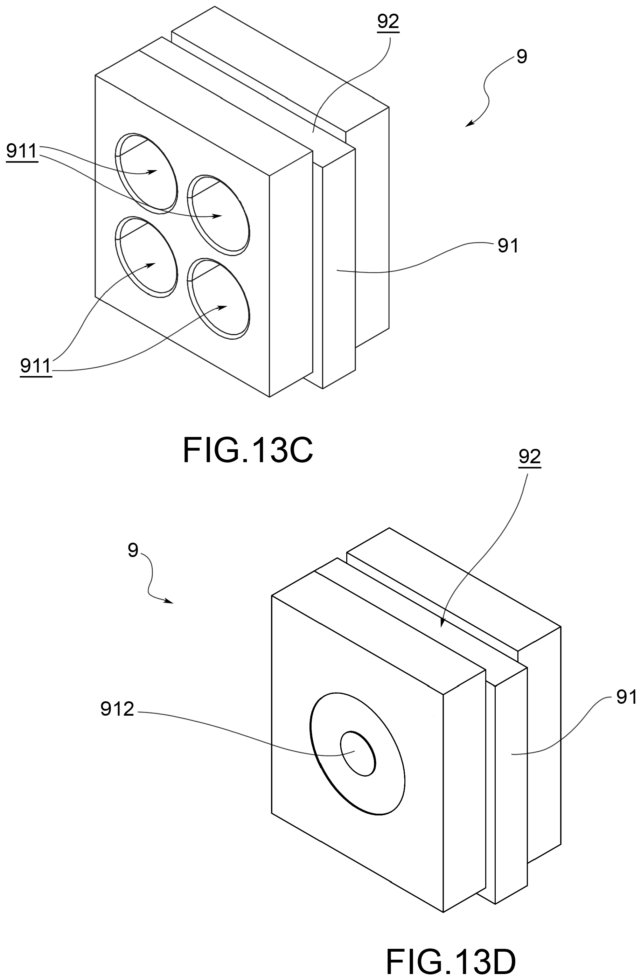

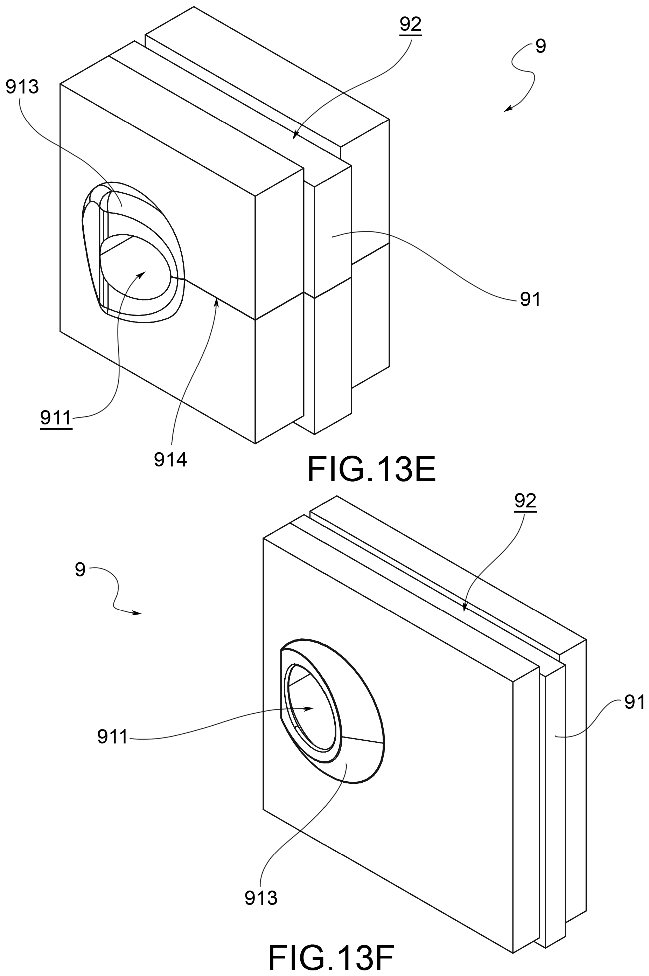

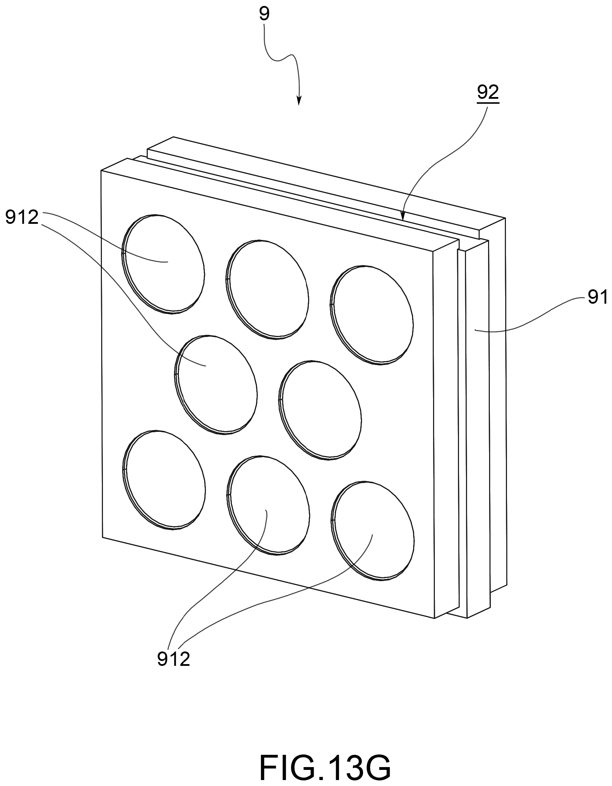

- Figures 13A and 13G show a detailed axonometric view and side view of further embodiments of a panel engageable with the body of the junction box to at least partially close a window obtained by removing a removable portion of the body of the box.

### Description of some preferred embodiments

In the following description, a cable provided with a connector is defined as a "connectorized cable"; in the art, a cable provided with a connector is also defined as cable with connector, connectorized cable, prewired cable, cable with terminal.

Reference numeral 1 indicates a junction box according to the present invention, for running and guiding at least one cable so that the cable is retained and sealed.

The junction box 1 (hereinafter box 1) comprises a box-shaped body 2, preferably closed by a cover 3.

In an embodiment, the body 2 of box 1 comprises a bottom 21 from which walls 22, 24 project vertically. The walls are connected to each other by side members 23.

In an embodiment, the cover 3 of box 1 comprises a base 31 from which sides 32, 34 project vertically. The sides are connected to each other by ends 33.

In an embodiment, box 1 is rectangular in shape, and therefore body 2 comprises two long walls 24 and two short walls 22. In such an example, cover 3 is rectangular in shape and comprises two long sides 34 and two short sides 32.

According to an embodiment, the body 2 of box 1 comprises at least one seat bottom 27. Preferably, the seat bottom 27 is arranged in bottom 21.

In an embodiment, the seat bottom 27 is an open seat, i.e., forming a through hole 281 adapted to receive fastening means or connector screws to connect body 2 to a wall or a container or a cabinet or a support.

In a further embodiment, the seat bottom 27 is a closed seat, i.e., provided with a removable or pierceable or knockout shield so as to form a through hole adapted to receive fastening means or connector screws to connect body 2 to a wall or a container or a cabinet or a support.

In an embodiment, in the case where it is necessary to provide a concealed cable inlet, bottom 27 is provided with at least one openable passage 282, i.e., with an area that is easily knocked out or removed or pierced in order to obtain a through hole for the inlet of at least one cable.

A box compartment 25 is defined between bottom 21 and the walls 22, 24 of the body 2 of box 1, where cables, connectorized cables, conduits, sheaths, as well as electric and/or mechanical devices useful for wiring these branches may be at least partially housed. The box compartment 25 is reclosable at the top by means of cover 3.

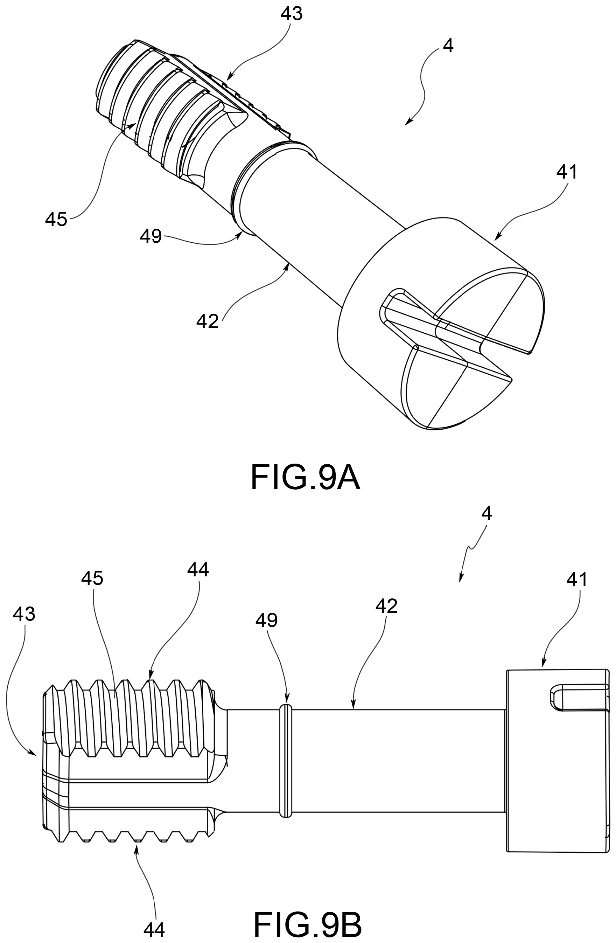

In an embodiment, cover 3 is fastenable to the body 2 of box 1 by means of suitable cover screws 4, shown in detail in Figures 9A and 9B.

In an embodiment, cover 3 is provided with an edge groove 37, obtained along the profile of cover 3, intended to house an edge 38 protruding along the profile of the body 2 of box 1.

According to an embodiment, the body 2 of box 1 comprises at least one cover screw housing 26, preferably provided with an internal thread. Preferably, the cover screw housing 26 is arranged in a side member 23.

According to an embodiment, cover 3 is also provided with at least one cover screw housing 26, preferably arranged at an end 33.

In an embodiment, the cover screw 4 comprises a screw body 42 provided at one end with a screw head 41, adapted to be engaged by screwing means (for example, a screwdriver), and at an opposite end with an engagement portion 43 adapted to be screwed into the cover screw housing 26 in the body 2 of box 1. Preferably, the engagement portion 43 is a plate provided, at opposite sides 44, with a thread 45 compatible with the internal thread of the cover screw housing 26 of the body 2 of box 1.

The cover screw 4 is provided, on an outer surface thereof, with a preferably annular and continuous ridge 49 useful for preventing the screw from accidentally coming out of the cover screw housing 26 in body 2 or in the cover 3 of box 1, for example during the assembly step.

In an embodiment, there is obtained, on the bottom 21 of the body 2 of box 1, preferably at the end of the cover screw housing 26, a fastening through hole 261 adapted to receive fastening means or connector screws to connect body 2 to a wall or a container or a cabinet or a support.

In the screw housing 26, on the bottom of housing 21, there are obtained through holes (provisionally indicated by D01) at each of the 4 ends 23, adapted to receive fastening means or connector screws to connect body 2 to a wall or a container or a cabinet or a support.

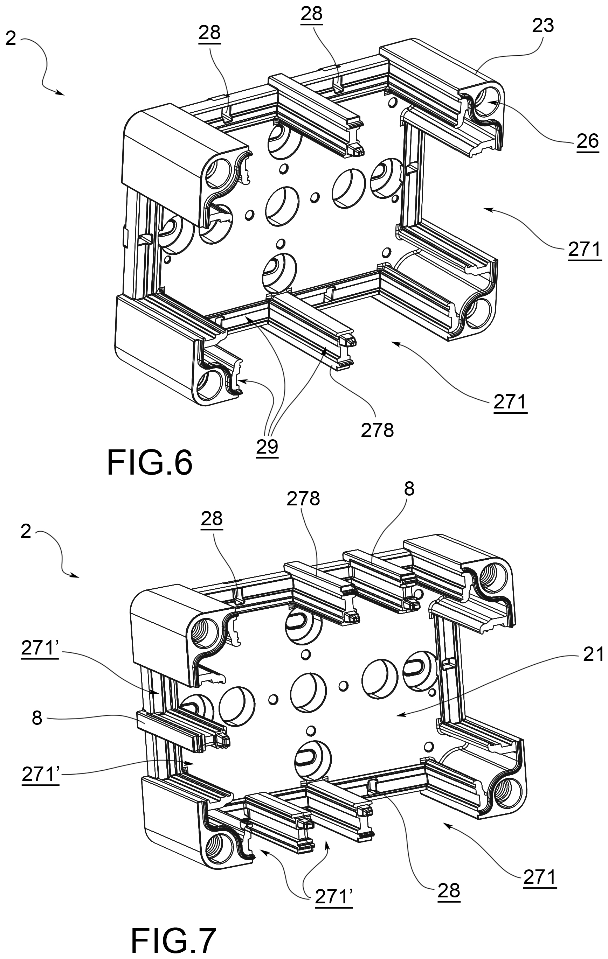

Advantageously, at least one wall 22, 24 of the body 2 of box 1 is provided with at least one removable portion 270 adapted to be easily removed to create a window 271 intended to be closed by a suitable removable panel 9, for running a cable, connectorized cable, conduit or sheath in a sealed manner.
Preferably, all the walls 22, 24 are provided with at least one removable portion 270. In an embodiment, body 2 of the box comprises two long walls 24 and two short walls 22. For example, in the case of a wall with multiple removable portions 270 arranged in series, that is, beside one another, such removable portions 270 are separated from one another by a fixed partition 278. As shown in Figure 6, the fixed partition 278 extends starting from the bottom 21 of the body 2 of box 1 up to a free end of wall 22, 24 on the opposite side.

In an embodiment, the removable portion 270 extends starting from the bottom 21 of the body 2 of box 1 and covers the entire height of the wall 22, 24 of the body 2 of box 1. In other words, window 271 obtained by removing a removable portion 270 is delimited by the body 2 of box 1 only on three sides.

In an embodiment, the wall 22, 24 of the body 2 of box 1 has weakened portions 272 that form the perimeter of the removable portion 270. In other words, the removable portion 270 is delimited at least partially by weakened portions 272 of wall 22, 24. For example, the weakened portions 272 are obtained as reductions in thickness, or as an incision, or as a groove, in the wall 22, 24 of the body 2 of box 1.

In an embodiment, the fixed partition 278 of the body 2 of box 1 is delimited, on both sides, by weakened portions 272.

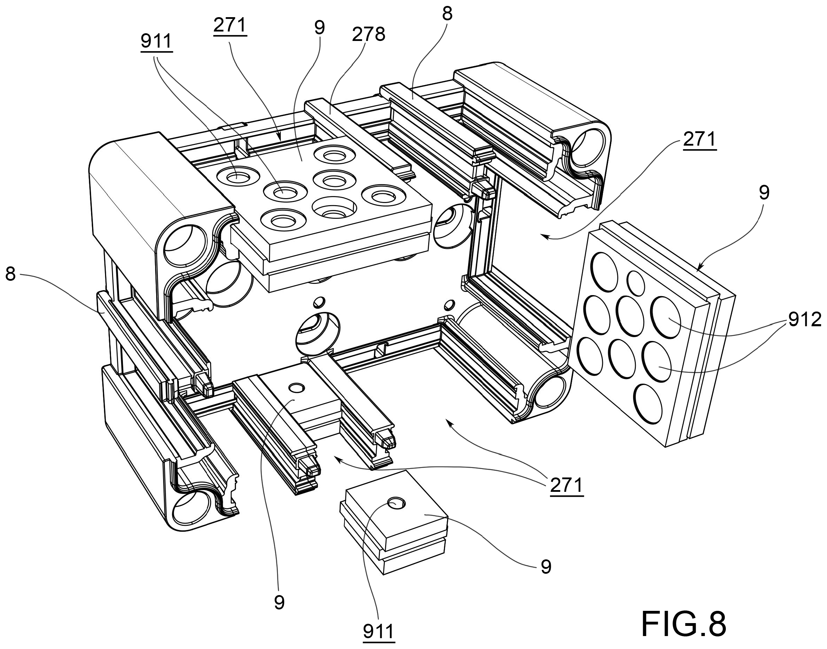

In an embodiment, the removable portion 270 is rectangular or square in shape and is delimited by three weakened portions 272: one at the bottom 21 of the body 2 of box 1 and two at the walls 22, 24 of the body 2 of box 1. In other words, window 271 obtained by removing a removable portion 270 is delimited by the body 2 of box 1 only on three sides. Thereby, advantageously, it is possible to remove the entire part of wall extending between two side members 23 or between one side member 23 and a fixed partition 278, as shown in Figure 8, thus forming a wide window 271 capable of housing a panel 9 intended for a plurality of cables. Instead, in the solutions of the background art, such as in DE 40 04 340 A1 and US 3 902 002 A, only small wall portions may be removed, exactly the size necessary to allow running a single cable.

The body 2 of box 1 comprises at least one panel seat 29 adapted to accommodate at least one portion of a removable panel 9 for running a cable, connectorized cable, conduit or sheath in a sealed manner. When panel 9 is engaged with the body 2 of box 1, panel 9 is at least partially inserted in at least one panel seat 29 so as to at least partially occlude window 271 obtained by removing the removable portion 270 of the body 2 of box 1. Advantageously, as shown in Figure 8, the panel seat 9 forms a track for sliding panel 9 into position in window 271.

In an embodiment, the panel seat 29 is a groove made in the thickness of the wall 22, 24 of the body 2 of box 1.

In an embodiment, at least one panel seat 29 is arranged behind at least one weakened portion 272 of the wall 22, 24 of the body 2 of box 1.

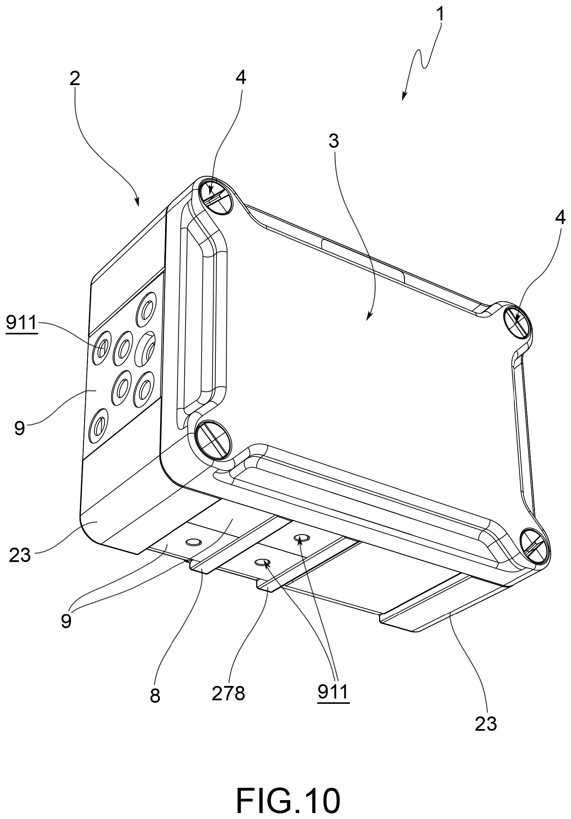

In an embodiment, at least one panel seat 29 is arranged behind at least one removable portion 270 of the wall 22, 24 of the body 2 of box 1. Thereby, once the removable portion 270 is removed, it is possible to insert panel 9 into the respective panel seat 29 to close window 271 thus obtained. Advantageously, therefore, as shown in Figure 10, panel 9 is contained within the volume of the body of box 1.

In an embodiment, at least two panel seats 29 are arranged behind a removable portion 270 of the wall 22, 24 of the body 2 of box 1. For example, in the case of a rectangular- or square-shaped removable portion 270, two panel seats 29 are arranged at a wall 22, 24 of the body 2 of box 1, on opposite sides of the removable portion 270. Thereby, the panel seats 29 form a track for the insertion of panel 29 for closing window 271.

In an embodiment, three panel seats 29 are arranged behind a removable portion 270 of the wall 22, 24 of the body 2 of box 1. For example, in the case of a rectangular- or square-shaped removable portion 270, there is also a panel seat 29 at the bottom 21 of the body 2 of box 1.

In an embodiment, the cover 3 of box 1 comprises at least one panel bar 39 adapted to be inserted into a respective recess 92 of panel 9 to improve the fastening thereof to box 1.

The body 2 of box 1 comprises at least one partition seat 28 adapted to at least partially receive a removable partition 8 adapted to divide the space of window 271 obtained by removing the removable portion 270 of the body 2 of box 1. When partition 8 is engaged with the body 2 of box 1, window 271 is divided, for example, into two subwindows 271'. Preferably, the cover 3 of box 1 also comprises at least one partition seat 28 adapted to at least partially receive a partition 8 to improve the fastening thereof to box 1.

In an embodiment, the partition seat 28 is a recess made in the bottom 21 of the body 2 of box 1. Preferably, the partition seat 28 is made along the perimeter of bottom 21, and faces the box compartment 25.

In an embodiment, the cover 3 of box 1 also comprises at least one partition seat 28 adapted to at least partially receive a partition 8. Preferably, the partition seat 28 is made along the perimeter of cover 3, and faces the box compartment 25.

The body 2 of box 1 also comprises an additional partition seat 288 adapted to receive fastening means of a partition 8 to improve the fastening thereof to box 1. Preferably, the additional partition seat 288 is made along the perimeter of bottom 21, and faces the outside of box 1. For example, the additional partition seat 288 is arranged below a wall 22, 24.

In an embodiment, the additional partition seat 288 defines an abutment undercut.

The object of the present invention is also a junction kit comprising a junction box 1 as described above, at least one panel 9 and preferably at least one partition 8.

Partition 8 is, for example, a column, a post, a pin, with mainly longitudinal extension.

Partition 8 comprises, at least at one end, at least one positioning means 81 to the body 2 and/or the cover 3 of box 1.

In an embodiment, the positioning means 81 is a protuberance adapted to be inserted into the partition seat 28 of body 2 or the cover 3 of box 1. According to an embodiment, the protuberance is conical or frustoconical in shape, as is the relative partition seat 28.

Partition 8 comprises, at least at one end, a fastening means 82 to the body 2 of box 1.

In an embodiment, the fastening means 82 is a flexible tab with a gripping tooth 83, adapted to be snappingly inserted into the additional partition seat 288 of the body 2 of box 1. In particular, the gripping tooth 83 of the fastening means 82 is intended to abut against the abutment undercut of the additional partition seat 288.

In an embodiment, panel 9 is a partially elastic element. For example, panel 9 is made of elastic material, for example, rubber or other elastic and deformable plastic material, in a peripheral part thereof, that is to say, a perimeter part thereof, in other words, at the surfaces in contact with the body 2 and/or the cover 2 of box 1. In an embodiment, panel 9 is made of a non-elastic material, such as for example, metal and/or plastic, in a central part thereof.

Panel 9 has the same shape as the removable portion 270 of the body 2 of box 1, or a shape corresponding to one fourth of the shape of the removable portion 270 of the body 2 of box 1.

Panel 9 comprises, at least on one side, a coupling element 91 to the body 2 of box 1. The coupling element 91 is insertable into the panel seat 29 of the body 2 of box 1. In an embodiment, the coupling element 91 is a protrusion present on at least one side of the panel. The coupling element 91 is insertable, for example, by sliding, in the panel seat 29, which is configured as a groove.

In an embodiment, panel 91 is square or rectangular, for example.

In an embodiment, panel 91 comprises a pair of coupling elements 91 arranged on opposite sides of panel 9.

In an embodiment, panel 91 comprises three coupling elements 91 arranged on three sides of panel 9.

Panel 9 comprises, at least on one side, a coupling seat 92 to the cover 3 of box 1. The coupling seat 92 is a recess 92 arranged on a side of panel 9, for example.

In an embodiment, panel 91 comprises three coupling elements 91 arranged on three sides of panel 9 and one coupling seat 92 arranged on an upper side of panel 9.

According to an embodiment, panel 9 comprises at least one cable opening 911, or at least one pierceable membrane 912 which forms said cable opening 911.

According to an embodiment, panel 9 comprises an opening line 914 so as to be capable of being spread apart along such an opening line for the insertion of a possible cable with connector.

According to an embodiment, panel 9 comprises at least one cable opening 911 adapted to receive a cable portion with force coupling.

According to an embodiment, the pierceable membrane 912 forming said cable opening 911 is elastic and capable of being opened, allowing the cable opening 911 to be spread apart for the fitting thereof onto or straddling a cable portion.

According to an embodiment, panel 9 comprises at least one guiding protrusion 913 for a cable, arranged at least partially around the cable opening 911.

According to an embodiment, at least one peripheral portion of panel 9 cooperates with the panel seats 29 of the body 2 of box 1, or with an adjacent panel 9, to form a force coupling between said panel 9 and said body 2 of box 1 or said adjacent panel 9.

According to an embodiment, a window 271 is completely occluded by a panel 9. According to an embodiment, a window 271 is completely occluded by two panels 9 arranged adjacent to each other, on the same plane.

According to an embodiment, when the body 2 of box 1 is closed by cover 3 and under operating conditions, at least one panel 9 is coupled to body 2 with force coupling, exerting a compression action on a cable received in the cable opening 911, thereby sealing the cable and retaining the cable itself with force.

According to an embodiment, the junction kit comprises a junction box 1 as described above, a plurality of panels 9, and preferably a plurality of partitions 8. For example, at least one of the panels 9 does not have the cable opening 911 and is used as a locking element of window 271.

Advantageously, the junction box 1 of the present invention is provided with all the walls intact at the time of supply. The user may decide how many and which sides to open so as to customize box 1 based on the wiring requirement thereof.

According to an embodiment, the customization of box 1 occurs by removing the pre-knockout section (removable portion 270) with a simple gesture, without the need for special equipment. Once the wall is open, it is possible to insert:
- a single panel 9, the size of which corresponds to window 271: adapted to cables with a large section or for running multiple pre-connectorized conductors;
- a plurality of panels 9 with a reduced size (for example, the size of which corresponds to one fourth of the size of window 271).

Advantageously, the panels 9 may also be openable or knockout, thus allowing also connectorized cables to be run, avoiding the removal of the connectors.

Advantageously, box 1 allows housing a large number of cables: a large number of cables may be housed in a small space based on the size of the box and the use of multiple panels.

Advantageously, box 1 allows a flexible configuration: the user may decide how many sides to open (from one to five), adapting the box to the design without making holes with a drill or milling cutters.

Advantageously, box 1 allows reducing overall volume: unlike cable glands, the panels 9 may be installed with a very small distance therebetween, thereby allowing the use of a more compact box. Not only, with respect to the use of cable glands, overall volume is also reduced along the cable axis, thus reducing the overall volume toward the outside of the box usually occupied by the cable gland.

Advantageously, box 1 allows storage space to be reduced: instead of numerous cable glands of various sizes, the box and some types of interchangeable panels 9 (single and multiple, large and small) suffice.

Advantageously, box 1 allows ease of installation and maintenance: assembly is fast and may also occur on preassembled lines. Any on-site modifications require the simple replacement or addition of the panels.

Advantageously, with respect to conventional cable glands, box 1 allows:
- a reduction in time: no drilling is required, fewer assembly steps, fewer components;
- the possibility of running connectorized cables: this is very complicated or impossible with conventional cable glands; the cable with connector is instead inserted directly via the openable panels 9;
- greater wiring density: more cables may be run in a single window 271, increasing connection capacity;
- space and cost savings: no large boxes are needed to house several cable glands; the box is compact with a more orderly layout.

Advantageously, a junction box 1 according to the present invention is a technological leap with respect to conventional "box and cable gland" systems. The implementation of pre-knockout walls and modular panels ensures:
- greater wiring management flexibility;
- installation and maintenance activity simplification;
- significant reduction of time, costs and space requirements;
- compatibility with electric cables, pneumatic conduits, or other types of conduits.

Advantageously, a junction box according to the present invention provides an optimized solution for all users requiring a safe, fast, and customizable cable lead, while at the same time meeting the safety requirements required in the industrial and automation field or in the domestic field.

Advantageously, a junction box according to the present invention, intended for electric and/or automation installations is modular and customizable: initially completely closed, it is designed to allow the complete or partial removal of the walls, allowing the insertion of suitable panels (also referred to as rubber grommets and/or wall pass-through supports, openable and non-openable) for safely running cables, connectorized cables, conduits and sheaths, ensuring optimal mechanical sealing and effective protection against water and dust.

In order to meet specific, contingent needs, those skilled in the art may make several changes and adaptations to the above-described embodiments and replace elements with others which are functionally equivalent, without however departing from the scope of the following claims.

### LIST OF REFERENCE NUMERALS

- 1: junction box
- 2: body
- 3: cover
- 4: cover screw
- 8: partition
- 9: panel
- 21: bottom
- 22: short wall
- 23: side member
- 24: long wall
- 25: box compartment
- 26: cover screw
- 27: seat bottom
- 28: partition seat
- 29: panel seat
- 31: base
- 32: short side
- 33: end
- 34: long side
- 37: seal groove
- 38: seal ridge
- 39: panel bar
- 41: screw head
- 42: screw body
- 43: engagement portion
- 44: opposite flanks
- 45: thread
- 49: ridge
- 81: positioning means
- 82: fastening means
- 83: gripping tooth
- 91: coupling element
- 92: recess
- 261: fastening hole
- 270: removable portion
- 271: window
- 271': under-window
- 272: weakened portions
- 278: fixed partition
- 281: through hole
- 282: shield
- 288: additional partition seat
- 911: cable opening
- 912: pierceable membrane
- 913: guiding protrusion
- 914: opening line

## Claims

1. A junction box (1) for running and guiding at least one cable, comprising:
- a body (2) formed by a bottom (21) from which walls (22, 24) connected to each other by side members (23) protrude, wherein a box compartment (25) is defined between the bottom (21) and the walls (22, 24);
- a cover (3), engageable with the body (2) to close the box compartment (25);
**characterized in that** at least one wall (22, 24) of the body (2) is provided with at least one removable portion (270), suitable for being removed to create a window (271) intended to be closed by a panel for running a cable; said removable portion (270) being at least partially delimited by a weakened portion (272) of the wall (22, 24);
and **in that** the body (2) comprises at least one panel seat (29) arranged behind at least one removable portion (270).

2. Junction box (1) according to claim 1, wherein the weakened portion (272) is a reduction in a thickness of the wall (22, 24), or a plurality of reductions in thickness, or an incision or a plurality of incisions, or a groove or a plurality of grooves, in the wall (22, 24) of the body (2).

3. Junction box (1) according to claim 1 or 2, wherein adjacent removable portions (270) are separated from one another by a fixed partition (278), and wherein the fixed partition (278) is delimited, only on both sides, by weakened portions (272).

4. Junction box (1) according to claim 3, wherein the fixed partition (278) extends from the bottom (21) of the body (2) to a free end of the wall (22, 24).

5. Junction box (1) according to any one of the preceding claims, wherein all the walls (22, 24) of the body (2) are provided with at least one removable portion (270).

6. Junction box (1) according to any one of the preceding claims, wherein the removable portion (270) extends starting from the bottom (21) of the body (2) up to a free end of the wall (22, 24).

7. Junction box (1) according to any one of the preceding claims, wherein the window (271) obtained by removing the removable portion (270) is delimited by the body (2) only on three sides.

8. Junction box (1) according to any one of the preceding claims, wherein the removable portion (270) is rectangular or square in shape.

9. Junction box (1) according to any one of the preceding claims, wherein the panel seat (29) is a groove obtained in the thickness of the wall (22, 24) of the body (2).

10. Junction box (1) according to any one of the preceding claims, wherein at least one panel seat (29) is arranged behind at least one weakened portion (272) of the wall (22, 24) of the body (2).

11. Junction box (1) according to any one of the preceding claims, wherein the cover (3) is fastenable to the body (2) by at least one cover screw (4) screwable into a cover screw housing (26) arranged in a side member (23) of the body (2), wherein the cover screw (4) comprises a screw body (42) with a screw head (41), and at an opposite end, with a plate-shaped engagement portion (43) in the form of a plate provided, at opposite flanks (44), with a thread (45).

12. A junction kit comprising:
- a junction box (1) according to any one of the preceding claims;
- at least one panel (9) at least partially insertable into at least one panel seat (29) to at least partially occlude the window (271) obtained by removing the removable portion (270) of the body (2) of the box (1), said panel (9) comprising at least one cable opening (911) or at least one pierceable membrane (912) to create a cable opening (911) for running and guiding a cable.

13. Junction kit according to claim 12, comprising at least one partition (8) provided, at one end, with at least one positioning means (81) insertable into a partition seat (28) of the body (2) of the box (1), and with a fastening means (82) snappingly insertable into an additional partition seat (288) of the body (2) of the box (1),
and wherein the body (2) of the box (1) comprises:
- at least one partition seat (28) made along the perimeter of the bottom (21) and facing the box compartment (25);
- at least one additional partition seat (288) made along the perimeter of the bottom (21), facing the outside of the box (1) and arranged below a removable portion (270).

14. Junction kit according to claim 12 or 13, wherein the panel (9) is an elastic element; and/or wherein the panel (9) has a shape corresponding to the shape of the removable portion (270) of the body (2) of the box (1) or a shape corresponding to one fourth of the shape of the removable portion (270).

15. Junction kit according to claim 12 or 13, wherein at least one panel (9) comprises at least one guiding protrusion (913) for a cable, arranged at least partially around a cable opening (911).
